(19) **Europäisches Patentamt / European Patent Office / Office européen des brevets**

(11) **EP 3 990 403 B1**

(12) **EUROPEAN PATENT SPECIFICATION**

(45) Date of publication and mention
of the grant of the patent:
**11.03.2026 Bulletin 2026/11**

(21) Application number: **20732105.0**

(22) Date of filing: **13.05.2020**

(51) International Patent Classification (IPC):
**C03B 5/04** (2006.01)   **C03B 5/185** (2006.01)
**C03B 5/20** (2006.01)   **C03B 5/235** (2006.01)

(52) Cooperative Patent Classification (CPC):
**C03B 5/04; C03B 5/185; C03B 5/20; C03B 5/2353;**
Y02P 40/50

(86) International application number:
**PCT/EP2020/063376**

(87) International publication number:
**WO 2020/229559 (19.11.2020 Gazette 2020/47)**

(54) **HYBRID HORIZONTAL GLASS MELTING FURNACE WITH HIGH FLEXIBILITY IN ENERGY INPUT**

HYBRIDER HORIZONTALER GLASSCHMELZOFEN MIT HOCHFLEXIBLER
ENERGIEEINSPEISUNG

FOUR DE FUSION DE VERRE HORIZONTAL HYBRIDE À GRANDE FLEXIBILITÉ DANS L'APPORT
ÉNERGÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2019 GB 201906745**

(43) Date of publication of application:
**04.05.2022 Bulletin 2022/18**

(73) Proprietor: **Fives Stein Limited
Didcot, Oxfordshire OX11 7HB (GB)**

(72) Inventors:
• **REYNOLDS, Andrew
Didcot Oxfordshire OX11 7HB (GB)**
• **KUHN, Wolf
94700 Maisons-Alfort (FR)**
• **MALPHETTES, Bruno
94700 Maisons-Alfort (FR)**

(74) Representative: **Gallafent, Richard John
Gallafents Ltd
The Old Vicarage
Stanbridge, Bedfordshire LU7 9HX (GB)**

(56) References cited:
**EP-B1- 2 462 066     US-A- 3 885 945**

## Description

The invention relates to an horizontal glass furnace for melting batch materials, having a tank containing a melt when the furnace is operating. In such a furnace, batch raw materials introduced at the inlet form a batch blanket that floats on the melt and is progressively melted.

The invention relates to a furnace of the kind comprising:

- a tank covered by a crown, containing a melt;
- at least one inlet located upstream of the furnace, for charging it with the materials to be heated;
- a combustion section provided with heating means, especially with burners;
- at least one heat recovery section for the flue gas between the batch inlet and the combustion section
- at least one downstream outlet for the melted materials; and
- at least one flue gas discharge opening provided upstream of the heat recovery section.

The global planet warming and the requirement for $CO_2$ emission reduction increases the pressure on glass manufacturers. Significant uncertainty exists as to the future technology that will emerge to address this challenge. Energy prices and $CO_2$ taxes will have a significant impact on competitiveness. Glass manufacturers are searching for a highly flexible technology that allows adapting the energy input for the melting process in a single melting tank. This tank should be scalable up very high tonnages, up to 1000 tons per day, to take advantage of the investment scale rule. This leads to a demand on flexible melting furnaces, with an electrical input from low values to up to 80% of total furnace heat input.

Vertical cold top melters with 100% electrical melting energy are known. They can be 'boosted' with some combustion but the electrical input cannot be reduced below 80%. Another problem of the cold top melters is that the design is well proven for pull ranges below 200 tons per day but upscaling to 400 or 600 tons per day remains to be developed.

In conventional horizontal furnaces, the electrical input fraction is limited from 0 to max 40%. This fraction remains too limited for a fully flexible melter. Furthermore, a wider range of flexibility in a conventional tank design encounters some basic technical problems that are listed below:

- The reduction of the combustion input requires a reduction of the heat flux on the upper face of the batch blanket. This can only be achieved by a significant drop of the combustion space temperature. Significant and repeated changes in crown temperature cause a severe problem for the mechanical stability and furnace lifetime (this point is important and is discussed further below).

- The safety of a combustion below the auto-ignition temperature of about 800°C needs additional precautions.

- Condensation of the volatile species in the flue gas cause superstructure material problems and eventually glass quality problems.

- The increase of the boosting input under the batch blanket in order to increase the heat flux density on the lower face of the batch blanket goes along with an increase of the melt temperature. This modifies significantly the melt convection and potentially disturbs the glass quality. Eventually, the temperature for chemical fining is reached under the batch blanket, which can undermine the controlled fining process.

- The increased melt temperatures and convection under the batch blanket enhances significantly the corrosion of the substructure.

In order to solve at least part of these problems, an evolution of the tank design is required that allows an electrical input fraction up to 80% and for a wide range of energy flexibility. Ideally, this flexibility is available on short term with minor mechanical adjustments on the tank by the operators. The design of this flexible tank should be composed of proven technological means.

Operating an horizontal furnace with 80% of electrical energy input also means that the melt and batch surface barely absorbs thermal flux from the combustion space. This is achievable in the zone of free melt surface being already at high temperature but causes a problem in the zone of batch melting. This can be illustrated as follows:
A melt surface of soda-lime silica glass has typically a surface temperature of 1500°C for reasons of glass fining. The net radiation at the melt surface is governed by the amount of emitted radiation compared to incident radiation. The incident radiation is composed of contributions from flames, flue gas and crown. The mean combustion temperature has to be about 1560°C for a typical net heat flux density of 60 kW/m$^2$ for a glass melt at 1500°C. This temperature has to decrease in order to reduce the net heat flux. The value of zero heat input is of course achieved with a combustion temperature of 1500°C. A further decrease of the combustion temperature means that the melt has to heat the superstructure. This is indeed feasible as long as the superstructure losses stay limited. Elsewise, the melt surface will suffer from cooling and the fining process will become disturbed. Variations of a few tenths of a degree centigrade are compatible with conventional crown constructions and materials.

The situation above a batch blanket is quite different. The batch surface undergoes different steps of heating, reacting, melting first into a solid crust, then liquidation often associated with foaming. The first step consists of heating the granular surface, triggering moisture evaporation and some solid state reactions. Above 900°C, melting sets on and the batch surface becomes glazed. The melting reaction consumes some energy with slows down the further temperature increase.

The mean crown temperature in the batch area of conventional combustion tanks for soda-lime glass is at about 1400°C. This means that the heat flux into a cold batch blanket is relatively high which is normally considered as an advantage. The combustion power has to supply this high heat flux and thus cannot simply be turned down. In order to reach a weaker net heat flux into the batch, the combustion temperature would need a significant reduction.

The initial zone of cold, unglazed batch blanket is relatively short in most tanks. However, the batch surface takes some time - and space - for increasing in temperature. A zero net heat flux means that the combustion temperature profile has to follow the batch surface temperature profile. However, this means that the batch surface is not anymore heated and thus stays at very low temperatures, until the heating from the lower side has penetrated the batch blanket. The crown temperature would have to stay for a significant length of time at a very low temperature, even near room temperature.

The requirement of a very low combustion input for a flexible hybrid glass melting tank leads thus to a low net surface heat flux dilemma with a request for an extreme temperature drop of the crown in the batch melting zone. Such temperature variations cannot be supported by conventional furnace crowns. Moreover, the semi-transparent flue gas allows radiation from the hotter parts of the tank to penetrate into the colder, charging section. This hinders the creation of a steep temperature drop between the high temperature fining zone of a horizontal glass melter and the charging end.

In a simplified manner, one can consider that 50% of the melting energy of a batch blanket comes from its upper face and the other 50% from its lower face. The energy transport to its lower face can be realized in two ways: the combustion heats the free melt surface behind the batch blanket. The heated glass flows then by thermo-convection towards the batch blanket and heats its lower side. Alternatively, the heat can be injected directly to the melt by boosting electrodes under the batch blanket. The combustion input can thus be reduced in the area behind the batch blanket as the thermo-convection has then a very reduced or even zero heating requirement. The temperature of the combustion in the free surface zone stays conserved. But the combustion input above the batch blanket cannot be turned down for the before mentioned reasons. It is therefore impossible to increase the electrical boosting input beyond 50% of the total effective heat for the batch melting.

In practice, the ratio of boosting power is not calculated as a percentage of the useful heat for the glass melting but as a fraction of the total power consumption of the melting tank. Thus, the thermal losses of the tank are integrated in the consideration. Moreover, the efficiency of the combustion is determined by the flue gas losses. A typical value for oxy-combustion is 70% of efficiency with 30% losses by the flue gases. In the following, the current use in practice for the boosting input is adopted:

$$\% \text{ Boosting} = \text{Boosting power} / (\text{combustion} + \text{boosting power}).$$

The boosting power is considered as the effective power dissipated by the electric current in the melt. Transformer and cable losses have to be considered separately as this depends on the particular configuration of the power supply; in any case, these losses are substantially less than 10% with current power supply technology.

Taking now a ratio of 50% of heat input into the batch blanket faces as a guide value, considering similar wall losses of tank sub- and superstructure, and considering furthermore an efficiency of 70% for the combustion system, a practical value for the boosting input of 41% results. This presents of course a very rough estimation as many parameters influence the maximum value for a boosting input. Nevertheless, it is barely possible to exceed 50% of boosting input on a glass tank - without accepting a significant drop of the roof temperature in the batch melting section of the tank.

FR2711981 discloses an oxy-fuel combustion furnace for melting batch materials that includes a recuperation zone separated from the combustion zone by a radiation protection screen. The height of the screen also increases the velocity of the combustion flue gas converging on the batch materials. The height of the crown in the recuperation zone is nevertheless kept well above the lower face of the screen 11 so as to maintain a large flue gas volume. This large volume is supposed to be necessary for those skilled in the art to ensure good emittance of the semi-transparent flue gas for efficient heat transfer of the flue gases to the batch blanket. This large crown height precludes optimum efficiency of the recuperation zone,. Heat input is done by combustion, without a possibility of energy flexibility. The problem of very low flue gas and crown temperatures in the recuperation zone in order to approach very low net heat flux into the batch blanket is not discussed in this patent.

US5536291 discloses an air-fuel combustion furnace for melting batch materials. Said patent discloses a furnace design for reducing emissions of nitrogen oxides NOx. The furnace includes a combustion zone in which burners are fitted. When it is intended for these burners to operate with a shortage of air, the furnace includes a supplementary zone intended to complete the combustion. This zone is equipped with a pair of burners supplied with a large excess of air so as to introduce the supplementary oxygen for completing the combustion of the flue gas coming from the melting zone. To promote effective mixing between the flue gas coming from the melting zone and the oxygen introduced in the supplementary zone, the height of the crown is lowered in this zone. The presence of screens on either side of this supplementary zone and the lowering of the crown in this zone also make it possible to increase the convective heat transfer between the flue gas and the batch blanket resulting from the increase in flue gas velocity. The convective heat transfer may thus compensate for the low emittance of the flue gas. However, this configuration is suitable only for a high amount of cullet in the batch so as to limit dust carry over. Since the function of this supplementary zone is principally to oxidize the unburnt material, it is not optimized for thermally exhausting the flue gas, especially in oxy-fuel combustion. Electrodes are installed in the bottom area of the charging end, by means of which the glass melt in the charging end is heated electrically in order to prevent the temperatures in this area from falling below a certain level, or even to prevent the glass melt from solidifying. The problem of very low flue gas and crown temperatures in the recuperation zone in order to approach very low net heat flux into the batch blanket is not discussed in this patent. The proposed tank does not solve the low net surface heat flux dilemma.

US4882736 discloses a furnace for better use of energy in flue gas, which is given with 800-1000°C outlet temperature, a segmentation of glass flow to avoid return convection, and reduction of NOx formation. Electrodes are used to avoid freezing of glass at charging side and keep fluidity of glass by small amounts of electrical input. Electrodes also contribute to melt the batch blanket but their number is limited as their location is only possible under the batch blanket close to raw material inlet (no electrodes can be implemented in shallow sections of tank), without possibility of high energy flexibility. Both problems of very low crown temperatures in the melting section and variation of crown temperature are not addressed (only a lowest flue gas temperature of 800°C is mentioned). The problem of very low flue gas and crown temperatures in the recuperation zone in order to approach very low net heat flux into the batch blanket is not discussed in this patent.

FR2948929 discloses a furnace for melting batch materials which comprises a recuperation zone between the inlet and the combustion zone, through which the flue gas from an oxy-fuel combustion reaction predominantly flows, a downstream outlet for the heated or melted materials, at least one flue gas discharge opening provided upstream of the recuperation zone, and the average height of the recuperation zone is such that vertical radiation from the flue gas is promoted towards the surface of the blanket to the detriment of horizontal radiation parallel to the surface of the blanket. Heat input is done by combustion, without teaching alternatives with electrical heat input, and their impact in furnace design, for flexibility in energy input. The problem of very low flue gas and crown temperatures in the recuperation zone in order to approach very low net heat flux into the batch blanket is not discussed in this patent.

US4932035 discloses a glass melting furnace having three sections: a melting section, a clarifying section and finally a homogenising section. It discloses heating the glass melt using both electrodes and burners, but does not address the problems noted above, nor provide a furnace which enables flexible operation in practice.

US3885945 discloses a glass melting furnace including a charging port, a heat recovery section having a roof, and a combustion section from which flue gas can flow through the heat recovery section to a flue gas discharge opening. The heat input is provided by a combination of Joule effect heating as well as from burners in the combustion section.

According one aspect of the invention, there is provided an horizontal glass furnace for melting raw materials in a tank comprising, from the furnace inlet:

. a port for charging the furnace with raw materials to be melted;

. a heat recovery section having a suspended roof;

a combustion section;

. a downstream outlet for the molten glass and the tank further comprising a flue gas discharge opening enabling evacuation of the flue gas from the combustion section to flow through the heat recovery section and to a flue gas discharge opening and characterised by the features set out in claim 1.

According to preferred ways of putting the invention into practice:

. the crown in zones B and C is a silica crown with a temperature kept above 1300°C; at least one burner in combustion section is filled with oxidizer having an oxygen content greater than 21 %;
. a complementary heating means is placed above raw material blanket in the recovery section, whose input can be adjusted to limit temperature variation of along heat recovery section;
. the complementary heating means is formed by a line of burners arranged perpendicularly to the direction of the raw material, whose burner flames extend from the roof to the batch blanket.

According to another aspect of the the present invention, there is provided a method of operating an horizontal glass furnace as described above, wherein heat inputs of electrodes and burners is balanced seamlessly along furnace operation according to variation of fuel and electricity costs to minimize furnace production cost while limiting carbon dioxide emissions from combustion.

When operating according to this aspect of the invention:

. the heat input of the electrodes may cover 20% to 80% of total furnace heat inputs;
. the melt surface in last combustion zone may be kept above the chemical fining temperature thanks to a burner when heat input of the electrodes covers 80% of total furnace heat inputs;
. at least 70% of the area of the batch blanket in the operation with low combustion input may be covered by the recovery section; the additional area of the batch blanket may be covered by the first combustion zone;
. the batch blanket may be kept in the recovery section and the first combustion zone.

According to the invention, heat inputs of electrodes and burners may be balanced according to variation of oxygen costs, and wherein burners in combustion zone are filled with oxidizer having an oxygen content between 21% and 100% according to variation of oxygen costs.

A glass horizontal furnace according to the invention may also include the following constructional elements or features taken alone or being associated with each other in various combinations to the extent that they are not incompatible or exclusive of each other:

. Flat roof on heat recovery section is designed to withstand significant temperature swing, in the charging zone from about 200°C up to 1000°C, when switching from maximal to minimal electric energy inputs ratios, without mechanical adjustment to its supporting structure.

. High power electric boosting in the heat recovery section for batch melting.

. Flat roof on heat recovery section is designed to rise up to 1400°C when furnace operates with high combustion inputs.

. A recuperator recovers heat from the flue gas leaving heat recovery section when the furnace operates with high fraction of energy supplied by combustion.

. Flue exhaust temperature about 200 to 600 °C for low combustion input which renders the combustion highly efficient.

. Conventional arch crown in the combustion section, which is divided in a first control zone allowing a high heat input and a second control zone with moderate heat input.

. Combustion power input in the first combustion zone can be adjusted to very different levels in order to modulate the heat flux input into batch and glass melt in this zone.

. Stable temperatures in last zone of combustion section corresponding to fining temperature (about 1450 to 1580 °C in the case of soda-lime glass).

. Burners in last combustion zone operated at relatively low power and are aero-combustion type, with cold or hot air, or oxy-combustion type with or without gas preheating.

. The combustion in first combustion zone has more design power than last zone as it compensates when the boosting input is reduced.

. Burners in first combustion zone are oxy-combustion type or aero-combustion type.

. Aero-combustion with preheated air (preheated air might be necessary to maintain high efficiency).

. Oxy-combustion with gas and oxygen preheating.

. Increase of the combustion power can also be achieved with aero - burners by oxygen-enrichment. This allows limiting the flue gas quantity for increasing power. It also avoids the removal of burners for the lower power inputs.

. Slow convection in fining zone (last combustion zone).

. Specific barrier in tank before fining zone, done by electrodes, gas bubbling or refractory dam.

. Refractory dam after a boosting barrier or bubbling barrier in tank before fining zone or shallow dam combined with such specific barrier.

. Deeper tank in last combustion zone for longer fining and temperature reduction before the throat.

. An intelligent control system allowing switching smoothly from high electricity to high combustion inputs at constant pull and glass quality.

. Batch surface glazing system as for example described in WO2011016007 to enhance the heat absorption of the blanket and to limit carry over.

. Devices allowing smooth shifts on a daily basis to follow the availability renewable electricity.

. Small vertical impingement oxy-burners on heat recovery section allowing a significant increase of the combustion input and quite low boosting factions in the order of 0-20%.

In a heat recovery section for the transfer of thermal energy from the flue gas to a charge, such as the batch materials, the aim is to maximize the heat flux between the flue gas, the roof and the charge. The emittance of the flue gas varies according to the type of fuel (natural gas, liquid fuel, etc.) and the type of oxidizer (% of oxygen). The semi-transparent nature of the flue gas causes also a variation in its emittance as a function of its volume. A thick layer of flue gas will thus emit a higher radiation flux density for a given temperature. Therefore better energy transfer and greater efficiency of the heat recovery section are expected for a larger flue gas thickness. For this reason, conventional tanks have high crowns for heat recovery when the flue gas is evacuated in the charging area.

The net flux density between the flue gas and the batch blanket is determined by their radiative exchange. The higher the temperature difference, the higher the net flux density. To maintain a temperature difference and therefore a sufficient net flux density over the entire length of a heat recovery section, the furnace is designed for the flue gas and the blanket to flow counter currently.

The significant drop of the flue gas temperatures - in particular for the low combustions input - trigger a strong force for the thermo-convection. This thermo-convection brings cooled flue gas from the charging zone back towards the entrance zone of a heat recovery section. This accelerates also the convection of the hot flue gas towards the flue gas outlets in proximity to the charging. The recirculation driven by the thermo-convection deteriorates the exhausting of the thermal energy of the flue gas. The intensity of the thermo-convection depends on the available inner height of the gas volume in the heat recovery zone.

The presence of a horizontal temperature gradient in the flue gas also generates a horizontal radiation flux. This horizontal radiation results in partial homogenization of the flue gas temperature along the heat recovery section. For a given inlet temperature, the flue gas temperature firstly drops rapidly because of the net flux into the blanket and also because of losses through horizontal radiation. The losses through horizontal radiation are then absorbed by the flue gas and walls located downstream. The energy transmitted into the blanket via the flue gas close to the outlet is therefore partly compensated for by the supply of horizontal radiation. This phenomenon limits the drop in flue gas temperature.

Thereby, it is advantageous to reduce the thickness of the flue gas layer above the blanket. Such a volume decrease reduces the flue gas emittance. However, a lowered crown also reduces the flow cross section for the horizontal radiation, resulting in a lower horizontal flux. In this way, the horizontal homogenization by radiation and thermo-convection of the flue gas is effectively reduced. Obviously, the presence of a pronounced horizontal temperature gradient in the flue gas results in higher efficiency of a counter-flow heat exchange.

The reduction in the crown height leads to an increase in the recuperation heat flux. Nevertheless, too small a crown height results in a drop in recuperation heat flux because of too large a drop in the flue gas emittance. There is therefore an optimum crown height for maximizing the thermal exhaustion of the flue gas.

This optimum height depends in a complex manner on many parameters (semi-transparent properties of the flue gas and their absorption spectrum, emissivity of the blanket and of the crown, horizontal temperature gradient and, of course, flue gas temperature, blanket temperature, the length and width of the zone, the flue gas flow rate, the losses via the crown, etc.). EP2462066 discloses how to determine the optimum height for a given set of parameters.

A flat roof, according to the invention, makes possible to have an optimum height of the heat recovery section along its width, what is not possible for a bent crown for which the minimum and maximum heights have to be as close as possible to the intended height.

The roof height may also vary along the heat recovery section so as to optimize the vertical radiation relative to the horizontal radiation, for example by taking into account the change in emissivity of the flue gas or the batch blanket.

The crown may be made up of refractory blocks attached to a metal structure. This way, the mechanical function of the roof support and the enclosure function by heat resistant material are dissociated. Temperature variation on the inner 'hot' side of the wall have no impact on the mechanical stability of the roof. As such a suspended roof is made up of numerous suspended bocks, a strong decrease in temperature will open joints between the blocks. This can easily be avoided by putting the edge blocks under a spring load.

A further advantage of the suspended roof is the possibility of a hot repair. The mechanics allows for an extraction of individual blocks, or of rows of blocks. This could prove useful for long running times. Flat suspended roof structures exist also in versions with insulation inserted in the areas between the suspension points. This allows the heat losses of flat roofs to be reduced. The heat recovery section might require an adaptation of the inner height; This can be achieved by a stepwise change of the height of the suspended blocks. The inner face of the blocks might be slightly tilted in order to maintain a flat inner surface of the roof with changing height.

Unlike a conventional crown, the described suspended flat roof can accept significant variations of its hot face temperature. Moreover, it is pretty easy to implement different refractory material types along the heat recovery section in order to adapt the material best to the expected temperature range and to the changing chemical conditions. Appropriate materials are known from the design and operation of regenerators on glass tanks.

At this point, it is important to recall that conventional glass tank crowns are designed as segmental arches. The mechanical pressure of these arches is recovered by skewback blocks that transmit this force to a mechanical structure. This type of roof is very sensitive to temperature changes as the thermal expansion of the refractory material determines the exact span that has to be adjusted by the mechanical support. In case of errors in the mechanical adjustment or a reduction of span due to a temperature drop, joints open at the inner side of the roof and increase the corrosion risk. In the worst case, the roof can lose its mechanical stability.

A particular problem arises for crowns made of silica refractory material. The evaporation of NaOH from the melt triggers a condensation and corrosion on the crown. In function of type of silica, combustion and glass melt, the critical temperature to respect to avoid the condensation is about 1300 to 1450°C. A decrease of the silica crown temperature below this critical temperature is to be avoided.

The furnace according to the invention preserves a conventional crown construction in its combustion zone. The heat recovery zone is realized as a suspended roof that can accept low temperatures and temperature variations in function of the operation of the tank. On the other hand, stable roof temperatures are maintained in the zone of the combustion with its arch crown.

The furnace may include, near the charging inlet, an intense heating means for melting a surface layer of the materials introduced, to increase the emissivity of the batch blanket right from the inlet of the furnace and thus to improve the radiative heat transfer between the blanket and the flue gas in the heat recovery section. This solution is particularly advantageous for all furnaces with a low cullet content, such as furnaces for float glass, glass tableware, glass fibre, solar glass, etc.

Advantageously, the intense heating means is formed by a curtain of flames directed downwards from a rail of burners extending over the entire width of the furnace, above the batch blanket. The heating means may also be formed by an electromagnetic radiation emitter extending over the entire width of the furnace, above the batch blanket, such as infrared or microwave radiation.

Apart from the abovementioned arrangements, the invention consists of a number of other arrangements which will be explained in greater detail below in conjunction with an exemplary embodiment described with reference to the appended drawings, although thesis embodiments is in no way limiting. In these drawings:

- Figure 1 is a schematic longitudinal vertical section through a furnace according to the invention;
- Figure 2 is a schematic longitudinal top view through the furnace according to Figure 1.

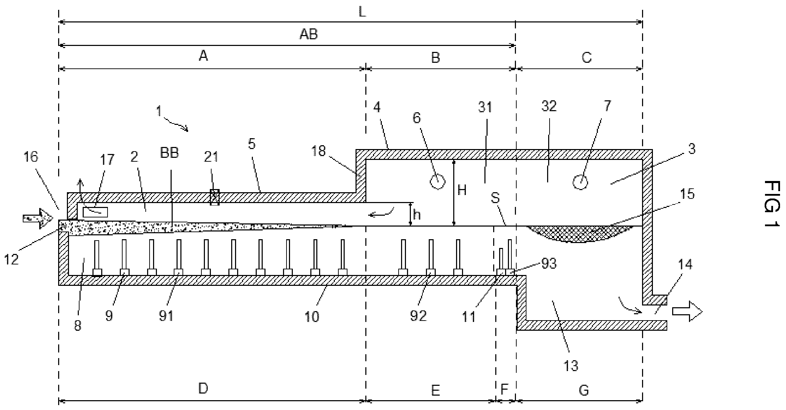

Figure 1 of the drawings shows a furnace 1 for heating and melting batch raw materials, the furnace comprising a tank 10 covered by a crown 4, 5, the tank 10 containing a melt 8 when the furnace is in production.

The terms "upstream" and "downstream" should be understood according to the direction of advance of the batch materials, that is to say along the direction from left to right in Figure 1.

From the entry to the exit, the furnace superstructure includes two main sections, a heat recovery section 2 followed by a combustion section 3 divided into two zones 31 and 32 provided with burners 6, 7. An inlet 16 is provided upstream of the furnace for charging it with batch raw materials and a downstream outlet 14 for discharging refined glass is located at the combustion section 3.

Materials introduced at the inlet 16 (by screws or push system) form a batch blanket BB that floats on the melt 8 and is progressively melted.

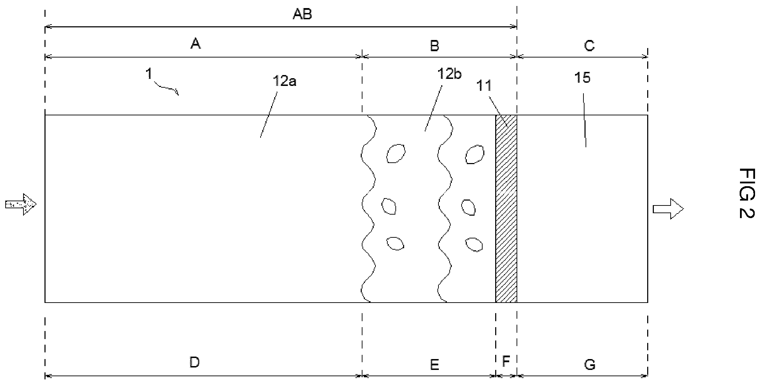

Looking to the tank of the furnace filled with glass melt, as represented on Figures 1 and 2, we can delimit 4 domains. From upstream:

. Domain D where the surface of the melt is permanently covered by a batch blanket BB,

. Domain E where the surface of the melt can be partly covered by the batch blanket BB. The limit of batch blanket length moves within the domain depending on furnace operation conditions. Ahead limit of blanket front line, some batch logs may be present in this domain.

. Domain F where melted glass rises from the bottom to the surface of the bath.

. Domain G where melted glass is brought to fining temperature before sinking to the throat outlet of the tank. The domain G can also be designed with a float glass tank waist and cooling barrier.

Convection currents are set up in the melt 8 between the upstream of the melt at a lower temperature and the downstream end thereof.

The height h of the crown 5 in the heat recovery section 2 is lower than the height H of the crown 4 in the combustion section 3. The connection between the crown in the combustion section 3 and the crown in the heat recovery section 2 is made by means of a gable wall 18. A progressive transition of the combustion crown 4 to the roof 5 of the heat recovery section could be done by a short inclined wall.

At least one flue gas discharge opening 17 is provided at the end of the heat recovery section 2, on the furnace charging side. Two openings 17 can be located on side walls of the furnace, as shown on Figure 1. Alternatively, a flue gas discharge opening 17 is provided in the upper part of the crown 5, towards its upstream end, to discharge vertically the flue gas. This opening 17 is in the form of a rectangular slot which extends over the entire width of the furnace, thereby promoting laminar flow of the flue gas over the entire width of the heat recovery section and preventing the formation of pockets where the gas is stagnant. This also prevents recirculation loops. Alternatively, the flue outlets can be located in the end wall - particularly advantageous if the batch chargers are positioned laterally.

The crown 5 lying above the heat recovery section 2 has an inner surface which is at the same level as, or lower than, the lower edge of the gable wall 18 at the opening of the heat recovery section 2 into the combustion section 3. The surface of the crown 5 is continuous, that is to say it does not include substantial projections or discontinuities that may induce flue gas recirculation loops. However, the change in height of the crown along the heat recovery section may be produced by a succession of small steps.

The small height h of the cross section of the heat recovery section 2 makes it possible to limit, in the heat recovery section, the horizontal parasitic radiation that tends to make the flue gas temperature homogenous and therefore tends to reheat the flue gas towards their exit, which is not favourable to maximum flue gas exhaust. The arrangement of the heat recovery section promotes heat exchange by vertical radiation between the flue gas and the batch blanket BB, corresponding to the preferred method of heating the blanket.

Electrodes 9, 91 are located under the batch blanket BB along the heat recovery section 2 length and width. Electrical current flows from one electrode to another in molten glass and causes its heating. Electrical inputs from these electrodes can be adjusted from 20% to 80% of total furnace energy input, the balance being contributed by combustion. Distribution of the electrodes along the heat recovery section 2 can be regular, the distance between two electrodes being constant. Alternatively, the distribution of the electrodes may vary along the length of the heat recovery section to adjust inputs according to local requirements. Density of electrodes can be higher on upstream side of heat recovery section. It could also be higher close to walls of the tank.

Input power of electrodes can be the same for all electrodes. Alternatively, input power of electrodes are different according to the position of electrodes in the tank to meet local input requirements.

The height of the electrodes 9 can be the same for all electrodes. Alternatively, the height of electrodes are different according to the position of electrodes in the tank. Typically, height of the electrodes can be lower close to furnace inlet 16 due to higher blanket thickness on this side.

Electrodes 92 are also located in the domain E where the surface of the bath can be partly covered by the batch blanket BB. The input power control of these electrodes is adjusted independently of those located in heat recovery section. These electrodes are used to control the position of the front end of the batch blanket in order to be sure that no un-melted material remains at the end of this variable zone. Thus, the electrodes input power is increased when it is necessary to limit the length of the batch blanket.

Electrodes 93 can also be located in domain F, such electrodes forming a barrier 11. The input power control of these electrodes is adjusted independently of other electrodes, those located in heat recovery section and those located in variable domain E for batch blanket. These electrodes are used to control the rise of melted glass from the bottom, in the variable domain E for batch blanket, to the surface of the bath in a high temperature fining domain G. Thus, the electrodes input power is increased when it is necessary to increase the ascending current flow. Depending on furnace capacity and dimensions, one row of electrodes can be enough. When one or more complementary rows are needed, the height of the electrodes can be different, electrodes height increasing from upstream to promote ascending effect.

The number of electrodes located in a furnace according to the invention and their total heat capacity are much more important than for a conventional horizontal furnace having electrical boosting. They allow the furnace operating at high level of electricity input, up to 80%.

The combustion section 3 has a first combustion zone 31 located upstream, and a second combustion zone 32 located downstream, on furnace exit side.

First combustion zone 31 has the function of bringing energy to the melt to heat it to a temperature close to the fining temperature. The energy is brought directly to the melt for the surface of the melt not covered by batch blanket and indirectly through this batch blanket where it is present. Second combustion zone 32 has the function of bringing energy to the melt to heat it to fining temperature and to hold it at this temperature. The fining onset temperature is about 1420 to 1450°C to 1580 °C for soda-lime silica glass requiring a melt surface temperature of about 1500°C.

In combustion section 3, energy is transferred to the melt mainly by radiative exchange, directly from burner flames or indirectly by crown and wall radiation, completed by fumes radiation.

Heating capacity installed on first combustion zone 31 is higher than to heating capacity installed of second combustion zone 32. Number of burners can be the same or higher in the first compared to second combustion zone. Unit burner capacity could be the same for all burners of combustion section. It could be also different according to local energy requirements.

According to different embodiments of the invention, burners could be:

. Identical of different on both first and second combustion zone,
. Partially identical and partially different on first and second zone,
. Identical or different on one combustion zone, the first or the second one,
. dedicated to aero-combustion or to oxy-combustion,
. fed with oxidizer having oxygen content between 21% to 100%.

The oxygen content of oxidizer can be adjusted according to fluctuation of oxygen price, between 100% when it is low to 21% (i.e. air not enriched with oxygen) when it is expensive.

The oxygen content of oxidizer can also be adjusted according to combustion section heating input in order to adjust volume of fumes. For high combustion section heating input, the oxygen content can be increased to limit volume of fumes. Conversely, oxygen content can be decreased for low combustion section heating input. Controlling the volume of fumes generated on combustion section, it is possible to keep flue gas temperature at discharge opening above a minimum temperature. This minimum temperature is determined by the requirement for the flue gas pollution abatement system. It is also determined by the temperatures of the onset of condensation - for example of sulphuric acid (Dew point about 150°C for glass tanks).

Controlling the volume of fumes generated on combustion section, it is also possible to keep the flue gas speed on the heat recovery section at the level required to limit batch material carry over.

On operation, heating input from first combustion zone 31 can be close to zero, depending on furnace throughput, raw materials melted and glass quality requirement. Conversely, heating input from second combustion zone 32 should always be higher than a minimum which is the energy required to keep a volume 15 of glass close to the surface of the bath at the fining temperature. This volume 15 of glass should be enough to keep glass at furnace outlet 14 at the quality required whatever is furnace throughput.

Length B of first combustion zone 31 can be close to length C of second combustion zone 32.

Optimum convective flow of the flue gas is thus provided by the heat recovery section 2, counter currently with the batch blanket BB and with a flue gas flow rate that is uniform over the width of the furnace. The flue gas outlet is equipped with means for adjusting the distribution of the flue gas flow rate over the width of the furnace so as to regulate the distribution of the flue gas over the width of the heat recovery section. The flue gas velocity is sufficient over the entire length of the heat recovery section 2 to prevent the formation of a cooler stagnant layer on the surface of the blanket. The flue gas velocity is also sufficient to remove the carbon dioxide $CO_2$ given off by the reaction of the batch materials as they are being heated up and to promote its rapid discharge via the flue gas discharge opening 17.

To improve the heat exchange between the flue gas and the batch blanket, the furnace may include a doping means for doping the flue gas throughout the heat recovery section, so as to reinforce the flue gas emittance. The doping means may comprise particle injection devices provided in the crown of the heat recovery section, judiciously distributed over the length of this crown. A more intense particle injection device may be provided near the opening of the heat recovery section 2 into the combustion zone 3 enabling a particle curtain to be produced as a barrier to the radiation from the combustion zone 3. This curtain allows the flue gas to pass through it while attenuating, or stopping, the radiation coming from the combustion zone. The particles injected for increasing the flue gas emittance may be soot, coal or petroleum coke particles or finely ground particles of cullet or batch materials.

The operation of the tank with the presented design allows for two principal operation modes:

. High boosting input under the batch blanket in zone D, high boosting input in zone E in order to limit the batch extension mainly to the length of the zone A, low combustion input in zone B mainly determined by the stabilisation of the crown temperature, standard combustion input in the zone C to maintain the high fining temperature, barrier boosting input in zone F in order to lift the bottom glass to the upper glass layers for fining.

. Low boosting input under the batch blanket in zone D just to avoid freezing/devitrification of the melt, low boosting input in zone E in order to allow the batch extension up to the barrier boosting zone F, high combustion input in zone B in order to finalise the batch melting process and to heat the melt in the free zones before and in the barrier zone F, standard combustion input in the zone C to maintain the high fining temperature, barrier boosting input in zone F in order to lift the bottom glass to the upper glass layers for fining and to participate in the glass heating of the melt recirculation roll under the batch blanket.

With high boosting input, the main energy for the batch melting is supplied at the lower face of the batch blanket by the electrical boosting. In this mode, the extension of the batch blanket is limited to the heat recovery zone. The 'cooling' effect of the batch blanket is thus limited to the zone with the flat crown with flexible temperature capability. The negative impact of the 'cooling' batch on the crown in the zone B is avoided. Thus, the combustion input in zone B can stay very limited and helps principally to stabilise the crown temperature to the lower acceptable limit.

The batch blanket and batch logs should not significantly exceed the heat recovery zone. The length of the heat recovery zone is designed to cover at least 70%, preferably 80% of the un-melted batch surface. This condition can be tested beforehand by a numerical modelling of the tank and batch melting. Thus, only 20% or 30% of the batch surface 'cools' the combustion zone which presents roughly 10-15% of the total heat flux for the batch melting. In practice, the batch surface presents often a complex morphology with fluctuates in time. However, with image analysis of the furnace camera, mean coverage fractions for different areas in the tank can be evaluated. The combination of image analysis and numerical modelling allows thus to well predict the minimum area of 70% of coverage of the batch blanket by the heat recovery zone with its length A.

The electrical boosting in zone E supports the melting process by supporting the primary melt recirculation and brings 'hot' glass at the surface in counter flow to the batch blanket. The barrier boosting in zone F participates to this counter flow but also assures that the glass pull stream is lifted to the surface zones in zone G to assure proper high temperature fining of the glass. The flue gas from the combustion in zones B and C is gathered in the heat recovery zone A and helps to preheat the batch surface. This way, the combustion contributes to the batch melting without entering the dilemma of low combustion power above cooling batch blanket leading to a dramatic crown temperature drop.

With low boosting input, the lower limit of the boosting input in zones D and E is mainly determined by the lowest acceptable temperature of the melt at the charging end. In function of glass type, this temperature can be as low as 1100°C. The batch blanket is allowed to extend into the zone B and will thus be exposed to the combustion in this zone. The combustion power can thus be tuned up and supplies a high heat flux into the batch blanket end. At the same time, more flue gas is produced and directed into the heat recovery zone. This way, a significant amount of heat is already transmitted to the batch blanket in the heat recovery zone A. The barrier boosting helps again to lift cold glass from the melting to the melt surface in zone G for fining. The free surface of the melt between the batch end logs and in the barrier zone F also absorbs a significant amount of radiation from the combustion. The heat transmitted to the melt is transferred by the primary convection roll to the lower side of the batch blanket and supports the melting from the upper side.

The length of the zone B is determined from the extension of the batch blanket under low boosting input. This condition can be tested beforehand by a numerical modelling of the tank and batch melting. The heat flux into batch and free surface areas must absorb about 70% of the combustion energy in this section. the produced flue gasses will enter the heat recovery area at about 1450°C. In the heat recovery area, about 10-20% of the remaining combustion power will be transferred to the batch blanket. The required area to absorb the 70% of the combustion energy in zone B depends again in a complex manner on the batch melting process with its complex morphology that fluctuates in time. However, with image analysis of the furnace camera videos, mean coverage fractions for different areas in the tank can be evaluated. The combination of image analysis and numerical modelling allows thus to well predict the progressing of the batch blanket and the heat absorption of the batch in the heat recovery in zone A and the residual melting in zone D. The batch then enters the high intensity combustion zone B and numerical modelling allows to predict the batch extension in order to determine the required length of zone B.

To determine the ratio of recovery zone to combustion melting zone, with a high boosting percentage of 80%,

typically, 60 kW/m$^2$ as a high end value by electrical input in a batch blanket (for max 50% of cullet). Add 2 - 20 kW/m$^2$ as mean input in upper face from the heat recovery. One can assume a mean input value of 65kW/m$^2$ for this tank section. In the next section B, this heat input is completed by a slight combustion input and further strong boosting input. A value of typically 55 kW/m$^2$ can be assumed for this section with still a strong boosting contribution but a weak combustion heat flux.

The total mean flux density for the melting process per section is thus given by:

. mean input in heat recovery on length A: 65 kW/m$^2$ (sum of lower and upper batch blanket face),
. mean input in first combustion section B 55 kW/m$^2$ (sum of lower, upper batch blanket face, input from combustion + barrier boosting input).

With high combustion input (20% of boosting), the total mean flux density for the melting per section is thus given by:

. mean input in heat recovery on length A : 40 kW/m$^2$
. mean input in first combustion section B 110 kW/m$^2$

In order to achieve the same total heat input for the melting of the glass up to the fining temperature, the length of the heat recovery and the first combustion zone have to be chosen correctly.

The required length of the recovery section can now be determined as follows:

. W: tank width
. B: length of first combustion section 31
. Qtot: total energy required to reach the fining temperature
. qA: mean heat flux density from upper and lower side of batch and melt surface
. qB: mean heat flux density from upper and lower side of batch blanket

$$A = \frac{Qtot - qB \cdot B \cdot W}{qA \cdot W}$$

Example, with W= 5 m, B=7 m and Qtot= 7 MW:

- With low boosting:

$$qA = 40 \text{ kW/m}^2$$

$$qB = 110 \text{ kW/m}^2$$

. A= 11.25 m
- With high boosting:

$$qA = 65 \text{ kW/m}^2$$

$$qB = 55 \text{ kW/m}^2$$

. A= 11.15 m

The variation of the length of the first combustion zone leads to a common length value for the zone A that matches the different levels of boosting input. In the present case, the ratio of the length A to the length AB of the tank dedicated for melting and rising to fining temperature: 11m/(11+5)m = 69%.

For different sets of heat flux inputs, different values for the length ratio result. However, even for high heat flux densities in the heat recovery section and low flux densities in the first combustion section, at least a ratio of 40% is required for the length A of the heat recovery section.

An example of embodiment of the invention is determined for a furnace having following basic specifications:

. Flexible operation range with 20% to 80% electrical heat input,. Throughput: 300 tons per day of emerald green (oxydised) glass, with cullet content between 50% to 70%,
. Potential pull increases to 320-350 tons per day in function of operation conditions.

With reference to Figures 1 and 2, main characteristics of furnace are as follow.

Dimensions

. Total furnace length L: 18.2 m
. Furnace width: 7 m
. Furnace surface: 127 m$^2$
. Furnace ratio: 2.4 tons per day per m$^2$
. Heat recovery section length A: 10 m
. Length E of variable zone where the surface of the bath can be partly covered by the batch blanket: 4 m
. Barrier 11 length F: 1 m
. First combustion zone length B (equal to E+F): 5 m
. Second combustion zone length C: 3.2 m
. Batch blanket when furnace operates with 80% electricity: 70 m$^2$ (4.2 tpd/m$^2$),
. Batch blanket when furnace operates with 20% electricity: 98 m$^2$ (3.1 tpd/m$^2$).

Heat inputs

. Total: 7 MW to melt batch materials and refine the glass
. Heat recovery section 2: 2-30 kW/m$^2$ (mean heat flux from flue gas in batch blanket)
. First combustion zone 31: 20-120 kW/m$^2$ (including both electrical and fuel inputs)
. Final combustion zone 32: 5-10 kW/m$^2$

The given heat flux densities refer to mean values in the reference zones.

Detailed furnace conditions of operation with 80% of electrical ratio and aero combustion

. Flue gas in heat recovery section: 1820 Nm$^3$/h
. Flue gas temperature at heat recovery section inlet: 1400°C
. Flue gas temperature at heat recovery section outlet: 400°C
. Lower heat flux to batch in heat recovery section: 60 kW/m$^2$
. Upper heat flux to batch in heat recovery section: 7.5 kW/m$^2$
. Lower heat flux to batch in domain E where the surface of the bath can be partly covered by the batch blanket: 25 kW/m$^2$
. Upper heat flux in first combustion zone 31: 16 kW/m$^2$
. Upper heat flux in final combustion zone 32: 10 kW/m$^2$
. Total electrical inputs: 7240 kW
. Total combustion inputs: 1820 kW

Detailed furnace conditions of operation with 20% of electrical ratio and aero combustion

. Flue gas in heat recovery section: 6860 Nm$^3$/h
. Flue gas temperature at heat recovery section inlet: 1400°C
. Flue gas temperature at heat recovery section outlet: 850°C
. Lower heat flux to batch in heat recovery section: 20 kW/m$^2$
. Upper heat flux to batch in heat recovery section: 20 kW/m$^2$
. Lower heat flux to batch in domain E where the surface of the bath can be partly covered by the batch blanket: 0

kW/m$^2$
. Upper heat flux in first combustion zone 31: 110 kW/m$^2$.
. Upper heat flux in final combustion zone 32: 15 kW/m$^2$
. Total electrical inputs: 3060 kW
. Total combustion inputs: 6861 kW

Detailed furnace conditions of operation with 80% of electrical ratio and oxy combustion (100% O$_2$)

. Flue gas in heat recovery section: 550 Nm$^3$/h
. Flue gas temperature at heat recovery section inlet: 1400°C
. Flue gas temperature at heat recovery section outlet: 400°C
. Lower heat flux to batch in heat recovery section: 60 kW/m$^2$
. Upper heat flux to batch in heat recovery section: 2 kW/m$^2$
. Lower heat flux to batch in domain E where the surface of the bath can be partly covered by the batch blanket: 25 kW/m$^2$
. Upper heat flux in first combustion zone 31: 16 kW/m$^2$
. Upper heat flux in final combustion zone 32: 10 kW/m$^2$
. Total electrical inputs: 7240 kW
. Total combustion inputs: 1560 kW

Detailed furnace conditions of operation with 20% of electrical ratio and oxy combustion (100% O$_2$)

. Flue gas in heat recovery section: 1880 Nm$^3$/h
. Flue gas temperature at heat recovery section inlet: 1400°C
. Flue gas temperature at heat recovery section outlet: 600°C
. Lower heat flux to batch in heat recovery section: 20 kW/m$^2$
. Upper heat flux to batch in heat recovery section: 8 kW/m$^2$
. Lower heat flux to batch in domain E where the surface of the bath can be partly covered by the batch blanket: 0 kW/m$^2$
. Upper heat flux in first combustion zone 31: 120 kW/m$^2$
. Upper heat flux in final combustion zone 32: 15 kW/m$^2$
. Total electrical inputs: 3060 kW
. Total combustion inputs: 6280 kW

Of course, the invention is not limited to the example that has just been described and many adjustments can be made to these examples without departing from the scope of the invention.

**Claims**

1. An horizontal glass furnace (1) for melting raw materials to form molten glass in a tank (10) comprising, from the furnace inlet:

   a port (16) for charging the furnace with raw materials to be melted;
   a heat recovery section (2) having a suspended roof;
   a combustion section (3);
   a downstream outlet (14) for the molten glass;and the tank further comprising
   a flue gas discharge opening enabling evacuation of flue gas from the combustion section to flow through the heat recovery section (2) and to a flue gas discharge opening (17);

   and **characterized in that**

   the combustion section has at least two combustion zones (31, 32) fitted with burners (6, 7), the first combustion zone ( 31) located upstream having the function of bringing energy to the melt to heat it to a temperature close to the fining temperature and the second combustion zone (32) located downstream having the function of bringing energy to the melt to heat it to fining temperature and to hold it at this temperature, the heating capacity installed on the first combustion zone (31) being higher than to heating capacity installed on the second combustion zone (32);

electrodes (9, 91, 92, 93) are located in the tank (10) in heat recovery section (2) and the combustion section (3); the installed heat input of the electrodes (9, 91, 92, 93) amounting to at least 50% of the total furnace heat inputs from the electrodes and the burners (6,7);

the ratio of the length (A) of the heat recovery section (2) to the length (AB) of the tank is at least 40%, the length (AB) being the length (A) of the heat recovery section plus the length (B) of the first combustion zone dedicated to melting the raw materials and raising the temperature of the melted materials to fining temperature;

the average inner height (h) of the recovery section (2) from the surface of the molten glass to the suspended roof is less than 50% of the maximum height (H) from the surface of the molten glass to the underneath of the roof in combustion section (3); and

a barrier (11) located in tank (10) to raise molten glass from the bottom to the surface of the molten glass bath, the barrier (11) being located prior to the final combustion zone (32) to enable the melt surface in the last combustion zone (32) to be kept above the chemical fining temperature.

2. A furnace as claimed in claim 1, wherein the roof in the combustion section (3) (zones B and C) is a silica crown adapted to be kept at a temperature above 1300°C.

3. A furnace as claimed in claim 1 or 2, wherein at least one burner (6, 7) in the combustion section (3) is adapted to be supplied with oxidizer having an oxygen content greater than 21%.

4. A furnace as claimed in any one of claims 1 to 3 and comprising a complementary heating means (21) placed above the raw materials to be melted in the heat recovery section (2), whose input can be adjusted to limit the temperature variation along the heat recovery section (2).

5. A furnace as claimed in claim 4, wherein the complementary heating means (21) is formed by a line of burners arranged perpendicularly to the direction of the flow of the raw materials, and whose burner flames extend from the roof of the heat recovery section (2) to the surface of the raw materials.

6. A method of operating an horizontal glass furnace (1) as claimed in any one of the preceding claims, wherein the heat inputs of electrodes (9, 91, 92, 93) and burners (6, 7) is balanced seamlessly during furnace operation according to variation of fuel and electricity costs to minimize furnace production cost while limiting carbon dioxide emissions from combustion.

7. A method according to claim 6, wherein the heat input of electrodes (9, 91, 92, 93) amounts to 20% to 80% of the total furnace heat inputs.

8. A method according to claim 6, wherein the melt surface in the last combustion zone (32) is kept above the chemical fining temperature thanks to burner (7) while the heat input of electrodes (9, 91, 92, 93) is at least 80% of the total furnace heat inputs.

9. A method according to claim 6, wherein the area of the raw materials to be melted is kept in the recovery section (2) and the first combustion zone (31).

10. A method according to claim 9, wherein at least 70% of the area of the raw materials to be melted during operation with low combustion input lies within the heat recovery section (2), the remaining area lying within the first combustion zone (31).

11. A method according to claim 6, wherein heat inputs of electrodes (9, 91, 92, 93) and burners (6, 7) is balanced according to variation of oxygen costs, and wherein burners (6, 7) in combustion zone (31, 32) are adapted to be supplied with oxidizer having an oxygen content between 21% and 100% according to variation of oxygen costs.

**Patentansprüche**

1. Horizontaler Glasschmelzofen (1) zum Schmelzen von Rohstoffen, um geschmolzenes Glas in einer Wanne (10) zu bilden, der vom Ofeneinlass aus Folgendes aufweist:

eine Öffnung (16) zum Befüllen des Ofens mit zu schmelzenden Rohstoffen;
einen Wärmerückgewinnungsabschnitt (2) mit einer hängenden Decke;
einen Verbrennungsabschnitt (3);
einen stromabwärtigen Auslass (14) für das geschmolzene Glas; und
wobei die Wanne ferner eine Abgasauslassöffnung aufweist, die die Ableitung des Abgases aus dem Verbrennungsabschnitt zum Strömen durch den Wärmerückgewinnungsabschnitt (2) und zu einer Abgasauslassöffnung (17) ermöglicht;

**dadurch gekennzeichnet, dass**

der Verbrennungsabschnitt mindestens zwei Verbrennungszonen (31, 32) aufweist, die mit Brennern (6, 7) ausgestattet sind, wobei sich die erste Verbrennungszone (31) stromaufwärts befindet und die Funktion hat, Energie in die Schmelze einzuspeisen, um sie auf eine Temperatur nahe der Läuterungstemperatur zu erhitzen, und sich die zweite Verbrennungszone (32) stromabwärts befindet und die Funktion hat, Energie in die Schmelze einzuspeisen, um sie auf die Läuterungstemperatur zu erhitzen und auf dieser Temperatur zu halten, wobei die in der ersten Verbrennungszone (31) installierte Heizleistung höher ist als die in der zweiten Verbrennungszone (32) installierte Heizleistung;
sich Elektroden (9, 91, 92, 93) in der Wanne (10) im Wärmerückgewinnungsabschnitt (2) und im Verbrennungsabschnitt (3) befinden; die installierte Wärmezufuhr der Elektroden (9, 91, 92, 93) mindestens 50% der gesamten Ofenwärmezufuhr von den Elektroden und den Brennern (6, 7) ausmacht;
das Verhältnis der Länge (A) des Wärmerückgewinnungsabschnitts (2) zu der Länge (AB) der Wanne mindestens 40% beträgt, wobei die Länge (AB) die Länge (A) des Wärmerückgewinnungsabschnitts zuzüglich der Länge (B) der ersten Verbrennungszone, die zum Schmelzen des Rohstoffs und Erhöhen der Temperatur des geschmolzenen Materials auf die Läuterungstemperatur vorgesehen ist, ist;
die durchschnittliche Innenhöhe (h) des Rückgewinnungsabschnitts (2) von der Oberfläche des geschmolzenen Glases zu der hängenden Decke nicht weniger als 50% der maximalen Höhe (H) von der Oberfläche des geschmolzenen Glases zu unterhalb der Decke im Verbrennungsabschnitt (3) ist; und
sich eine Barriere (11) in der Wanne (10) befindet, um das geschmolzene Glas vom Boden der Oberfläche des geschmolzenen Glasbades zu heben, wobei sich die Barriere (11) vor der letzten Verbrennungszone (32) befindet, um zu ermöglichen, das die Schmelzoberfläche in der letzten Verbrennungszone (32) über der chemischen Läuterungstemperatur gehalten wird.

2. Ofen nach Anspruch 1, wobei die Decke in der Verbrennungszone (3) (Zone B und C) eine Siliciumdioxid-Krone ist, die dazu ausgelegt ist, auf einer Temperatur über 1300°C gehalten zu werden.

3. Ofen nach Anspruch 1 oder 2, wobei mindestens ein Brenner (6, 7) im Verbrennungsabschnitt (3) dazu ausgelegt ist, mit einem Oxidationsmittel mit einem Sauerstoffgehalt von mehr als 21% versorgt zu werden.

4. Ofen nach einem der Ansprüche 1 bis 3 und aufweisend ein ergänzendes Heizmittel (21), das über den zu schmelzenden Rohstoffen in dem Wärmerückgewinnungsabschnitt (2) angeordnet ist, dessen Zufuhr angepasst werden kann, um die Temperaturschwankung entlang des Wärmerückgewinnungsabschnitts (2) zu begrenzen.

5. Ofen nach Anspruch 4, wobei das ergänzende Heizmittel (21) durch eine Reihe von Brennern, die senkrecht zu der Richtung des Rohstoffstroms angeordnet sind, gebildet ist und deren Brennflammen sich von der Decke des Wärmerückgewinnungsabschnitts (2) zu der Oberfläche der Rohstoffe erstrecken.

6. Verfahren zum Betreiben eines horizontalen Glasschmelzofens (1) nach einem der vorhergehenden Ansprüche, wobei die Wärmezufuhr der Elektroden (9, 91, 92, 93) und Brenner (6, 7) nahtlos während des Ofenbetriebs gemäß Schwankungen der Brennstoff- und Stromkosten angeglichen wird, um Ofenbetriebskosten bei gleichzeitigem Begrenzen der Kohlendioxidemissionen aus der Verbrennung zu minimieren.

7. Verfahren nach Anspruch 6, wobei die Wärmezufuhr der Elektroden (9, 91, 92, 93) 20% bis 80% der gesamten Ofenwärmezufuhr ausmacht.

8. Verfahren nach Anspruch 6, wobei die Schmelzoberfläche in der letzten Verbrennungszone (32) dank des Brenners (7) über der chemischen Läuterungstemperatur gehalten wird, während die Wärmezufuhr der Elektroden (9, 91, 92, 93) mindestens 80% der gesamten Ofenwärmezufuhr ausmacht.

9. Verfahren nach Anspruch 6, wobei der Bereich des zu schmelzenden Rohstoffs im Rückgewinnungsabschnitt (2) und der ersten Verbrennungszone (31) gehalten wird.

10. Verfahren nach Anspruch 9, wobei sich mindestens 70% des Bereichs des während des Betriebs bei niedriger Verbrennungsleistung zu schmelzenden Rohstoffs im Wärmerückgewinnungsabschnitt (2) befindet, wobei der verbleibende Bereich sich in der ersten Verbrennungszone (31) befindet.

11. Verfahren nach Anspruch 6, wobei die Wärmezufuhr der Elektroden (9, 91, 92, 93) und Brenner (6, 7) gemäß Schwankungen von Sauerstoffkosten angeglichen wird, und wobei die Brenner (6, 7) in der Verbrennungszone (31, 32) dazu ausgelegt sind, mit einem Oxidationsmittel mit einem Sauerstoffgehalt zwischen 21% und 100% gemäß Schwankungen der Sauerstoffkosten versorgt zu werden.

## Revendications

1.  Un four à verre horizontal (1) pour faire fondre des matières premières afin de former du verre en fusion dans une cuve (10) comprenant, à partir de l'entrée du four :

    un orifice (16) pour charger le four avec des matières premières à fondre ; une ouverture d'évacuation des gaz de combustion (17) ;
    une section de récupération de chaleur (2) ayant un toit suspendu ;
    une ouverture d'évacuation des gaz de combustion permettant l'évacuation des gaz de combustion d'une section de combustion pour traverser la section de récupération de chaleur (2) ;
    une section de combustion (3); et
    une sortie aval (14) pour le verre fondu ;
    dans lequel la section de combustion comporte au moins deux zones de combustion (31, 32) équipées de brûleurs (6, 7) ;
    dans lequel les électrodes (9, 91, 92, 93) sont situées dans le réservoir (10) dans la section de récupération de chaleur (2) et la section de combustion (3) ; l'apport de chaleur installé des électrodes (9, 91, 92, 93) représentant au moins 50 % des apports de chaleur totaux du four ;
    dans lequel le rapport entre la longueur (A) de la section de récupération de chaleur (2) et la longueur (AB) est d'au moins 40 %, la longueur (AB) étant la longueur (A) de la section de récupération de chaleur plus la longueur (B) de la première zone de combustion dédiée à la fusion des matières premières et à l'élévation de la température des matériaux fondus à la température d'affinage ;
    la hauteur intérieure moyenne (h) de la section de récupération (2) entre la surface du verre fondu et le toit suspendu est inférieure à 50 % de la hauteur maximale (H) entre la surface du verre fondu et la partie inférieure du toit dans la section de combustion (3) ; et
    une barrière (11) située dans le réservoir (10) pour faire remonter le verre fondu du fond vers la surface du bain de verre fondu, la barrière (11) étant située avant la zone de combustion finale (32) afin de permettre à la surface de fusion dans la dernière zone de combustion (32) d'être maintenue au-dessus de la température de raffinage chimique.

2.  Une four selon la revendication 1, dans lequel le toit de la section de combustion (3) (zone B et C) est une couronne en silice adaptée pour être maintenue à une température supérieure à 1300°C.

3.  Un four selon la revendication 1 ou 2, dans lequel au moins un brûleur (6, 7) dans la section de combustion (3) est adapté pour être alimenté en oxydant ayant une teneur en oxygène supérieur à 21%.

4.  Un four selon l'une quelconque revendications 1 à 3 et comprenant un moyen de chauffage complémentaire (21) placé au-dessus des matières premières à fondre dans la section de récupération de chaleur (2), dont l'apport peut être ajusté pour limiter la variation de température le long de la section de récupération de chaleur (2).

5.  Un four selon la revendication 4, dans lequel les moyens de chauffage complémentaires (21) sont formés par une ligne de brûleurs disposés perpendiculairement à la direction du flux des matières premières, et dont les flammes des brûleurs s'étendent du toit de la section de récupération de chaleur (2) à la surface des matières premières.

6.  Procédé de fonctionnement d'un four à verre horizontal (1) selon l'une quelconque des revendications précédentes, dans lequel les apports de chaleur des électrodes (9, 91, 92, 93) et des brûleurs (6, 7) sont équilibrés de manière transparente pendant le fonctionnement du four en fonction de la variation des coûts du combustible et de l'électricité afin de minimiser les coûts de production du four tout en limitant les émissions de dioxyde de carbone provenant de la combustion.

**7.** Procédé selon la revendication 6, dans lequel l'apport de chaleur des électrodes (9, 91, 92, 93) représente de 20 % à 80 % des apports de chaleur totaux du four.

**8.** Procédé selon la revendication 6, dans lequel la surface de fusion dans la dernière zone de combustion (32) est maintenue au-dessus de la température d'affinage chimique grâce au brûleur (7) tandis que l'apport de chaleur des électrodes (9, 91, 92, 93) représente au moins 80 % des apports de chaleur totaux du four.

**9.** Procédé selon la revendication 6, dans lequel la zone des matières premières à fondre est maintenue dans la section de récupération (2) et la première zone de combustion (31).

**10.** Procédé selon la revendication 9, dans lequel au moins 70 % de la surface des matières premières à fondre pendant le fonctionnement à faible apport de combustion se trouve dans la section de récupération de chaleur (2), la surface restante se trouvant dans la première zone de combustion (31).

**11.** Procédé selon la revendication 6, dans lequel les apports de chaleur des électrodes (9, 91, 92, 93) et des brûleurs (6, 7) sont équilibrés en fonction de la variation des coûts d'oxygène, et dans lequel les brûleurs (6, 7) dans la zone de combustion (31, 32) sont adaptés pour être alimentés en oxydant ayant une teneur en oxygène comprise entre 21% et 100% en fonction de la variation des couts de l'oxygène.

FIG 1

FIG 2

**EP 3 990 403 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2711981
- US 5536291 A
- US 4882736 A
- FR 2948929
- US 4932035 A
- US 3885945 A
- WO 2011016007 A
- EP 2462066 A